# EUROPEAN PATENT APPLICATION

(11) **EP 3 193 291 A1**
(43) Date of publication of application: **19.07.2017**
(21) Application number: 15840137.2
(22) Date of filing: 27.08.2015
(51) Int. Cl.: G06Q 10/08, G06Q 50/28, B63B 49/00, B65G 61/00, G06Q 50/04

(54) **BOARD-LIKE PRODUCT LOADING POSITION NOTIFICATION SYSTEM, BOARD-LIKE PRODUCT LOADING POSITION NOTIFICATION METHOD, AND BOARD-LIKE PRODUCT LOADING POSITION NOTIFICATION PROGRAM**

(30) Priority: 08.09.2014 JP 2014182525
(71) Applicant: JFE Steel Corporation, Tokyo 100-0011 (JP)
(72) Inventor: KISHIDA, Takateru, Tokyo 100-0011 (JP); NAKAJIMA, Tetsuya, Tokyo 100-0011 (JP); HOJO, Shigeto, Tokyo 100-0011 (JP)
(74) Representative: Grünecker Patent- und Rechtsanwälte PartG mbB
(86) International application number: PCT/JP2015/004322
(87) International publication number: WO 2016/038828

(57) **Abstract**

A board product loading position notification system has: an information network (2); a stowage planned position creation unit which is connected to the information network (2) and a database (9) and which creates a first stowage planned position for each of a plurality of board products in a hold; a Web server (1) storing the first stowage planned position created by the stowage planned position creation unit as a loading position in the database (9); and an information processing terminal (3 to 5) at a shipping destination connected to the information network (2) so that the loading position stored in the database (9) is able to be accessed through the Web server (1). When the plurality of board products is shipped by vessel, the shipping destination is notified of each of the loading positions for the plurality of board products in the hold of the vessel.

## Description

### Technical Field

The present invention relates to a board product loading position notification system, a board product loading position notification method, and a board product loading position notification program.

### Background Art

When board products, such as a thick steel sheet, (hereinafter referred to as a "thick sheet"), manufactured in a steelworks are shipped on the order of 100 to 1000 sheets to a consumer, thick sheets to be transported to different destinations after unloading are usually mixed in a hold of one vessel even in the case of the shipping to the same consumer. Therefore, in order to increase the working efficiency in unloading of the consumer at the shipping destinations, a manufacturer as a shipping origin once packs all the thick sheets, which are to be shipped by the same vessel, as stowage lots containing several thick sheets to hundreds of thick sheets for each destination of the consumer, and then the thick sheets are stowed in a hold in each stowage lot. Herein, information on the name of the vessel where the thick sheets to be shipped are stowed and the specification of each thick sheet is notified to the consumer before shipping as described in Patent Document 1. Moreover, the position in each stowage lot in the hold is also notified to the consumer.

Herein, after the shipping of the thick sheets, a certain situation, such as recombination work of a manufacturing line, suddenly arises at the consumer, and therefore, several thick sheets in the stowage lot stowed on the lower side of the hold are to be unloaded in priority to the other thick sheets when the vessel where the thick sheets are stowed arrives at a harbor of the consumer in some cases. In that case, according to the technique of Patent Document 1, the consumer knows the positions of the stowage lots containing desired thick sheets but does not have information on exact loading positions of the thick sheets themselves. Therefore, there arises a necessity of unloading all the stowage lots on the upper side in the hold until the stowage lots containing the desired thick sheets appear and unloading all the stowage lots containing the desired thick sheets. More specifically, when the desired thick sheet is contained in the stowage lot containing 100 thick sheets, for example, the consumer needs to unload once all the 100 thick sheets in the stowage lot containing the desired thick sheet because the consumer does not know whether the desired thick sheet is the first sheet or the 100th sheet from the top thick sheet in the stowage lot. Therefore, there has been a problem of imposing a burden of useless unloading work on the consumer.

To address the problem, a method is mentioned which includes, in shipping thick sheets by a manufacturer, checking and recoding the loading position of each thick sheet one by one after stowage work of the thick sheets. However, the method is difficult to execute in practice from the viewpoint of shipping work efficiency.

### Citation List

### Patent Document

Patent Document 1: JP 2004-227320 A

### Summary of Invention

### Problem to be Solved

The present invention has been made in view of the above-described problem. It is an object of the present invention to provide a board product loading position notification system, a board product loading position notification method, and a board product loading position notification program enabling efficient unloading at a shipping destination and enabling efficient shipping work at a shipping origin.

### Solution to Problem

In order to solve the above-described problem, a certain aspect of a board product loading position notification system of the present invention for notifying the loading position for each of a plurality of board products in a hold of a vessel to a shipping destination in shipping the plurality of board products by vessel, and the system has an information network, a stowage planned position creation unit which is connected to the information network and a database and which creates a first stowage planned position for each of the plurality of board products in a hold, a Web server storing the first stowage planned position created by the stowage planned position creation unit as the loading position in the database, and an information processing terminal at the shipping destination connected to the information network so that the loading position stored in the database is able to be accessed through the Web server.

A certain aspect of a board product loading position notification method of the present invention is a method for notifying the loading position for each of a plurality of board products in a hold of a vessel to a shipping destination in shipping the plurality of board products by vessel, and the method includes processing of creating a first stowage planned position for each of the plurality of board products in the hold, processing of stowing the plurality of board products in the hold based on the created first stowage planned positions, and processing of notifying the first stowage planned position as the loading positions to the shipping destination.

A certain aspect of a board product loading position notification program of the present invention is a program for notifying the loading position for each of a plurality of board products in a hold of a vessel to a shipping destination in shipping the plurality of board products by vessel, and the program has an information network, a Web server connected to the information network and a database, and an information processing terminal at a shipping destination connected to the information network so that the loading position stored in the database is able to be accessed through the Web server, in which the program causes the Web server to execute a step of creating a first stowage planned position for each of the plurality of board products in the hold and a step of storing the created first stowage planned position as the loading position in the database.

### Advantageous Effects of Invention

Accordingly, the board product loading position notification method of the present invention enables efficient unloading at a shipping destination and enables efficient shipping work at a shipping origin. Moreover, the use of the board product loading position notification system and the board product loading position notification program of the present invention enable efficient unloading at a shipping destination and enables efficient shipping work at a shipping origin.

### Brief Description of the Drawings

FIG. 1 is a block diagram of a board product loading position notification system according to an embodiment of the present invention;
FIG. 2 is a schematic view explaining steelworks equipment to which the board product loading position notification system according to the embodiment of the present invention is applied;
FIG. 3 is a flow chart illustrating a processing procedure of the board product loading position notification method according to the embodiment of the present invention;
FIG. 4 is a view illustrating a data configuration example of a shipping plan information file of the board product loading position notification system according to the embodiment of the present invention;
FIG. 5 is a view illustrating a data configuration example of a product information file of the board product loading position notification system according to the embodiment of the present invention;
FIG. 6 is a view illustrating a data configuration example of a warehouse information file of the board product loading position notification system according to the embodiment of the present invention;
FIG. 7 is a schematic view explaining a thick sheet storage situation in a hold;
FIG. 8 is a flow chart illustrating a procedure of hold stowage planning processing of a board product loading position notification method according to an embodiment of the present invention;
FIG. 9 is a view illustrating a data configuration example of a work restriction information file of the board product loading position notification system according to the embodiment of the present invention;
FIG. 10 is a view illustrating a data configuration example of a hold information file of the board product loading position notification system according to the embodiment of the present invention;
FIG. 11 is a schematic view explaining the stowage state of thick sheets in a hold;
FIG. 12 is a schematic view explaining a stowage basic rule of the board product loading position notification system according to the embodiment of the present invention;
FIG. 13 is a view illustrating a data configuration example of a palette restriction information of the board product loading position notification system according to the embodiment of the present invention;
FIG. 14 is a schematic view explaining a stacking state of thick sheets on a palette;
FIG. 15 is a view illustrating a data configuration example of distance indices between product warehouses of the board product loading position notification system according to the embodiment of the present invention;
FIG. 16 is a view illustrating a data configuration example of mixedly-loading conditions on a palette of the board product loading position notification system according to the embodiment of the present invention;
FIG. 17 is a view illustrating a data configuration example of logistics cost conditions of the board product loading position notification system according to the embodiment of the present invention;
FIG. 18 is a view illustrating a configuration example of a display screen to a consumer of first stowage planned positions created by the board product loading position notification system according to the embodiment of the present invention (No. 1);
FIG. 19 is a schematic view illustrating the stowage state of thick sheets in a hold according to the stowage planned positions illustrated in FIG. 18;
FIG. 20 is a view illustrating a configuration example of a display screen to a consumer of stowage planned positions created by the board product loading position notification system according to the embodiment of the present invention (No. 2);
FIG. 21 is a schematic view illustrating the stowage state of thick sheets in a hold according to the stowage planned positions illustrated in FIG. 19;
FIG. 22 is a view illustrating a configuration example of a display screen to a consumer of loading positions created by the board product loading position notification system according to the embodiment of the present invention;
FIG. 23 is a schematic view illustrating a screen for confirming the loading positions created by the board product loading position notification system according to the embodiment of the present invention; and
FIG. 24 is a schematic view explaining the stowage state of thick sheets to which the board product loading position notification method according to the embodiment of the present invention is applied.

### Description of Embodiments

Hereinafter, an embodiment of the present invention is described. In the following description of the drawings, the same or similar parts are designated by the same or similar reference numerals. The drawings are schematically illustrated, however, it should be noted that the relationship between the thickness and the planar size, the ratios of the thickness of each equipment and each member, and the like differ from those of the actual assembly. Therefore, the specific thickness and size should be determined in view of the following description. It is a matter of course that components with different size relations and ratios are included across the figures. The directions of "right and left" and "up and down" in the following description are merely definitions for convenience of description and do not limit the technical idea of the present invention. Therefore, it is a matter of course that, when the sheet is 90° rotated, the "right and left" and the "up and down" are exchanged for reading and when the sheet is 180° rotated, the "left" is changed to the "right" and the "right" is changed to the "left", for example.

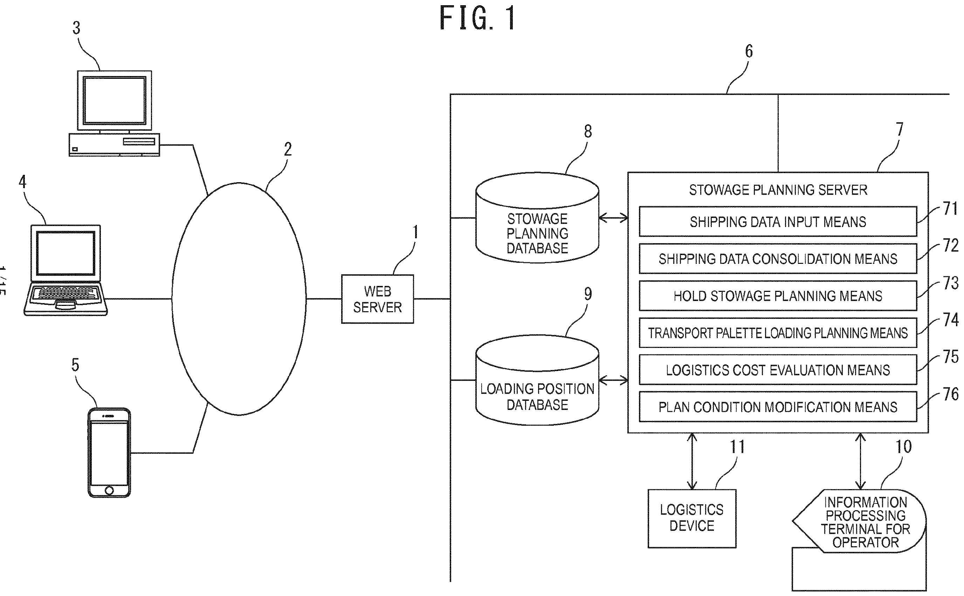

A board product loading position notification system according to the embodiment of the present invention is a computer system notifying, in shipping a plurality of board products by vessel, each of the loading positions for the plurality of board products in a hold of the vessel to a shipping destination. The board product loading position notification system has an information network 2 containing the Internet and the like, a Web server 1 at a manufacturer as the shipping origin connected to the information network 2, and a plurality of information processing terminals 3 to 5 at a consumer as a shipping destination connected to the information network 2 as illustrated in FIG. 1. The board product loading position notification system is managed by the Web server 1.

To the Web server 1, a stowage planning server 7, a stowage planning database 8, and a loading position database 9 are connected. The stowage planning database 8 and the loading position database 9 are also connected to the stowage planning server 7. The stowage planning server 7 is connected to each of an information processing terminal for operator 10 which is used by an operator stowing thick sheets in a hold on a wharf in a steelworks and a logistics device 11 transporting the thick sheets from a product warehouse to the wharf. Both the Web server 1 and the stowage planning server 7 are central processing units (CPU) or processors of a computer (not illustrated) and have a main memory and an auxiliary memory containing ROM, RAM, and the like, an input device, an output device, a communication device, various interface devices, and the like.

The manufacturer is a steel-manufacturing company manufacturing iron and steel articles, for example, and manufactures thick sheets as a board product, and ships the same to a consumer. The consumer is a shipbuilding company building a ship using thick sheets. One or more information processing terminals at the consumer may be connected to the board product loading position notification system. The information processing terminals at the consumer contain, for example, personal computers for business use possessed by employees belonging to the shipbuilding company. FIG. 1 illustrates the information processing terminal 3 containing a desktop type personal computer, the information processing terminal 4 containing a notebook type personal computer, and the information processing terminal 5 containing an electronic information terminal, such as a smartphone. The consumer logs into the board product loading position notification system at the manufacturer through the information processing terminals 3 to 5 to be able to correctly know the loading positions for thick sheets ordered by the consumer himself in a hold of a vessel, in which the thick sheets are to be loaded, through the Web server 1.

The plurality of information processing terminals 3 to 5 is able to log into/log off as needed or periodically the board product loading position notification system through the information network 2 by establishing a contract between the manufacturer and the consumer beforehand. Specifically, the plurality of information processing terminals 3 to 5 is configured to be able to access the loading position database 9 by entering the preset user identification (ID) number and password.

The stowage planning server 7 creates beforehand information on the stowage planned position in a hold for each of the plurality of thick sheets before stowage work using various data described later in the stowage planning database 8. After the stowage work, the stowage planning server 7 creates information on the loading positions as actually stowed positions where the thick sheets are actually stowed according to the created stowage planned positions. Both the created stowage planned positions and the loading positions are stored in the loading position database 9. The stowage planning server 7 is equivalent to the stowage planned position creation unit of the present invention.

The stowage planning server 7 creates work instructions about work of transporting thick sheets in a steelworks and work of stowing thick sheets in a hold. Specifically, the stowage planning server 7 creates a handling procedure from transporting thick sheets from a product warehouse to stowing the thick sheets in a hold so that all the thick sheets to be shipped are stowed at the created stowage planned positions.

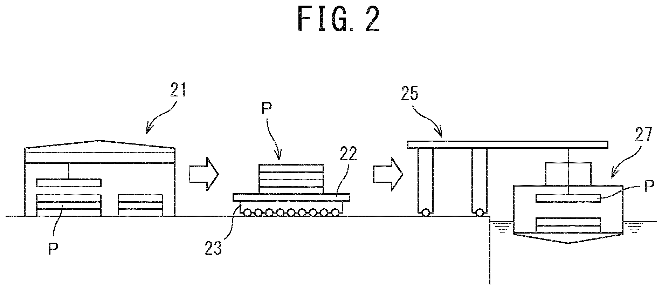

Herein, thick sheets P manufactured in a steelworks are temporarily stored in a product warehouse 21, stacked on a palette 22 of a product transporting vehicle 23 from the product warehouse 21 when the shipping timing arrives, and then transported in the steelworks to a wharf where a vessel 27 anchors as illustrated in FIG. 2. The thick sheets are placed once on a thick sheet storage place at the wharf, and then stowed in a hold of the vessel 27 by a dock crane 25. The dock crane 25 is operated by an operator. Moreover, an operator performing stowage work is also arranged in the hold. Herein, the product transporting vehicle 23 and the dock crane 25 are equivalent to the logistics device 11 illustrated in FIG. 1. The work instructions created by the stowage planning server 7 include work instructions for operators transmitted to the operator operating the dock crane 25 and the operator in the hold and work instructions for logistics device transmitted to the logistics device 11.

The operators receive the work instructions from the stowage planning server 7 through the information processing terminal for operator 10 illustrated in FIG. 1. The received work instructions are displayed on a display screen of the information processing terminal for operator 10. The logistics device 11 receiving the work instructions from the stowage planning server 7 performs the transportation work and the stowage work of the thick sheets according to the received work instructions. The logistics device 11 is configured so that all or part of the operations are automated so that the logistics device 11 operates according to the work instructions created by the stowage planning server 7 and is configured to assist thick sheet shipping work.

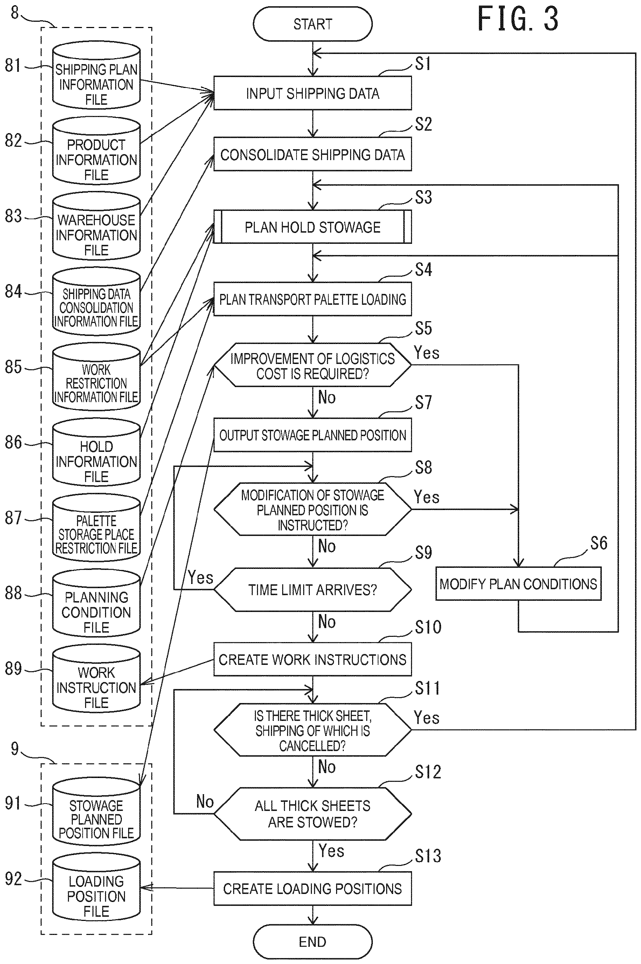

The stowage planning database 8 has, as files storing various kinds of data, a shipping plan information file 81, a product information file 82, a warehouse information file 83, a shipping data consolidation information file 84, a work restriction information file 85, a hold information file 86, a palette storage place restriction file 87, a planning condition file 88, and a work instruction file 89 as illustrated in FIG. 3. The loading position database 9 has a stowage planned position file 91 and a loading position file 92.

In the files 81 to 88 other than the work instruction file 89 of the stowage planning database 8, various kinds of data for creating the stowage planned positions and the work instructions are registered beforehand. In the work instruction file 89, work instruction data is registered which is created with the execution of board product loading position notification processing according to the embodiment of the present invention. In the two files 91 and 92 of the loading position database 9, data of the stowage planned positions and the loading position of the thick sheets is registered which is created with the execution of the board product loading position notification processing according to the embodiment of the present invention.

Next, operations of the board product loading position notification system executed by the Web server 1 are described with reference to FIG. 3 to FIG. 23. First, in shipping data input processing of Step S1 in FIG. 3, shipping data input unit 71 of the stowage planning server 7 receives board product (thick sheet) shipping plan information as input data from the shipping plan information file 81 of the stowage planning database 8. Moreover, the stowage planning server 7 receives the product information on thick sheets from the product information file 82 and receives warehouse information from the warehouse information file 83 as input data.

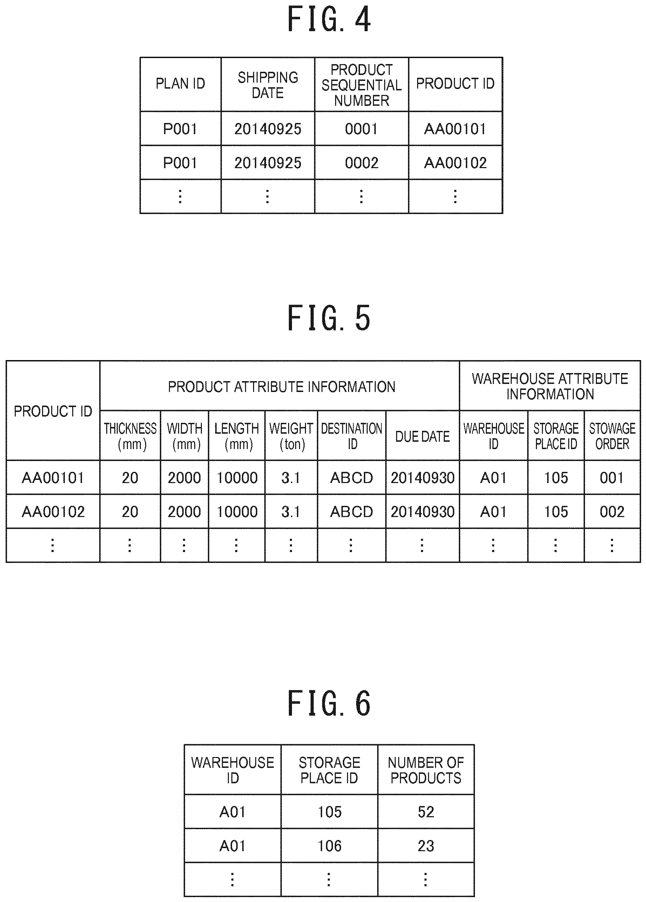

The shipping plan information includes data, such as a plan ID set for each thick sheet and a shipping date, a product sequential number, and a product ID associated with each plan ID, as illustrated in FIG. 4. The data is all created in advance according to the shipping dates and is recorded on the shipping plan information file 81. The plan ID is used for identifying each of the plurality of shipping plans created according to the shipping date and the like. Thick sheets for which the same shipping ID is set are stowed in the same vessel to be shipped. In this embodiment of the present invention, the shipping plan information is set so that a group of thick sheets expressed in one shipping plan information are thick sheets to be unloaded on the same port of unloading. However, a method for setting the shipping plan information is not limited thereto and may be changed as appropriate.

The product information is peculiar attribute information associated with the product ID of each thick sheet, includes data, such as various kinds of product attribute information and warehouse attribute information as illustrated in FIG. 5, and is recorded in the product information file 82. The various kinds of product attribute information includes a size including thickness, width, and length, a weight, a destination ID for identifying a shipping destination, and a due date. The warehouse attribute information includes a warehouse ID for identifying a warehouse where thick sheets are stored, a storage place ID for identifying the storage place in a hold, and a stacking order in a storage place.

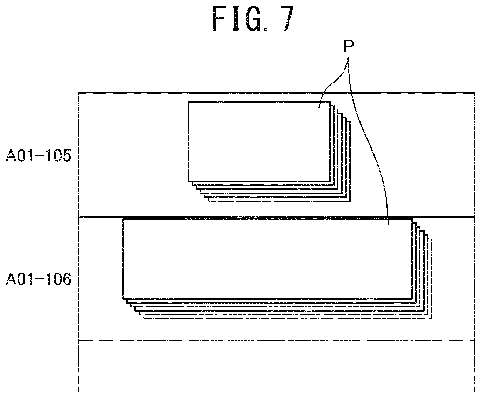

The warehouse information is information showing the storage capacity of each warehouse associated with each warehouse ID and each storage place ID, includes data, such as the storable number of thick sheets, for example, and is recorded in the warehouse information file 83 as illustrated in FIG. 6. FIG. 7 illustrates two storage places adjacent to each other in a warehouse having a warehouse ID of A01 and illustrates a state where the thick sheets P are stacked with the number of sheets within the storage limit in each storage place. A place ID105 and a place ID106 are given to the two storage places.

The warehouse attribute information illustrated in FIG. 5 is set in association with the product ID in the product information file 82 but may be associated with information other than the product ID insofar as the place of a product in a hold is able to be referred to and does not need to be stored in a file in an aspect of being associated with the product ID. For example, a configuration may be acceptable in which an ID serving as a key is separately set and the set key ID may be shared by the product information file 82 and the warehouse information file 83.

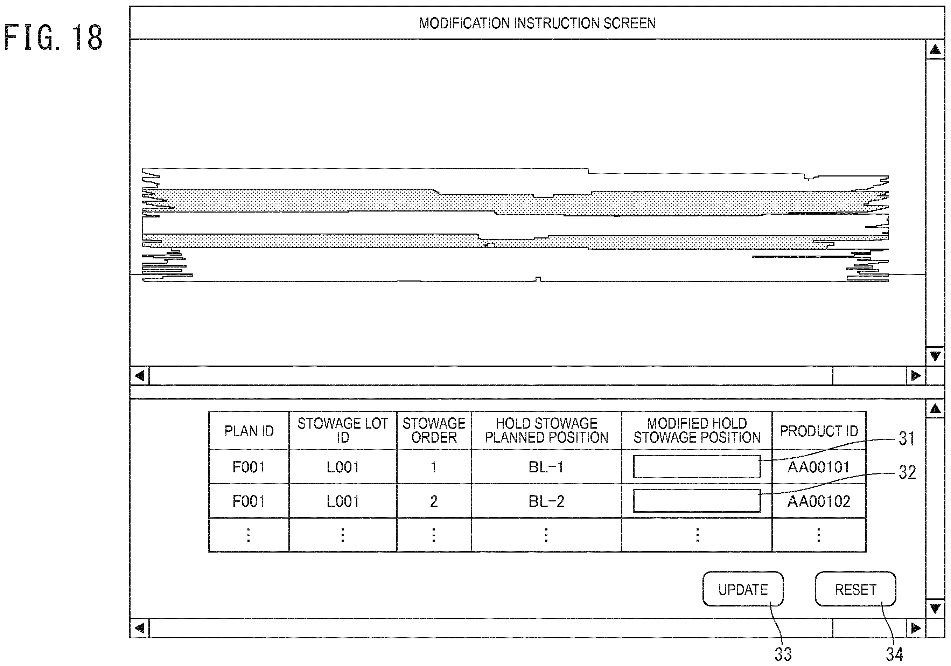

Next, the Web server 1 proceeds to shipping data consolidation processing of Step S2. Shipping data consolidation unit 72 of the stowage planning server 7 consolidates product groups having the same attributes, such as a destination ID, a due date, and a storage place ID in a warehouse in the product information, and then the consolidated product groups are set as one stowage lot. Herein, the shipping data consolidation unit 72 receives specific attribute information serving as an index (common key) common in the product groups for consolidation recorded as shipping data consolidation information from the shipping data consolidation information file 84 of the stowage planning database 8. As the common key, various kinds of attribute information illustrated in FIG. 4 to FIG. 6 are able to be selected as appropriate. In particular, by selecting the destination ID and the due date as the common key, and then consolidating product groups having the same destination ID and the same due date, the product groups having the same destination ID and the same due date are easily collected to one place without dispersing and stowed in a hold in the stowage work of each thick sheet, and thus the workability of the stowage work increases. Specific setting of the stowage lot is able to be achieved by giving the same stowage lot ID to each thick sheet to be consolidated as illustrated in a table in the lower side of FIG. 18.

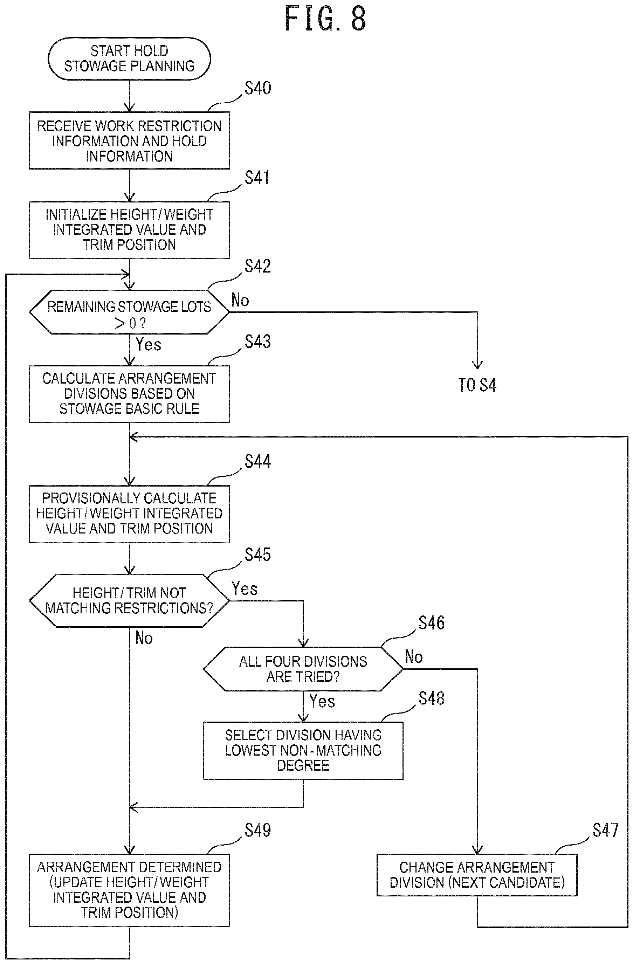

Next, the Web server 1 proceeds to hold stowage planning processing of Step S3. First, hold stowage planning unit 73 of the stowage planning server 7 receives work restriction information from the work restriction information file 85 of the stowage planning database 8 and receives hold information from the hold information file 86 in Step S40 as illustrated in FIG. 8.

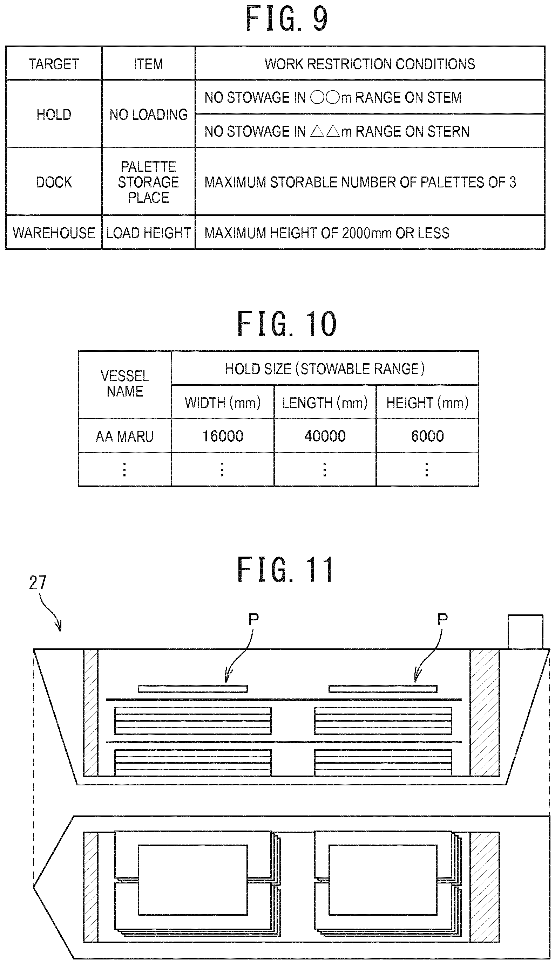

As illustrated in FIG. 9, the work restriction information includes data, such as work restriction conditions according to work target including a product warehouse, a wharf, or a hold and target items set for each work target, and is recorded in the work restriction information file 85. As illustrated in FIG. 9, the work restriction conditions for forbidding stowage work, such as "No stowage in ○○m range on stem" and "No stowage in ΔΔ m range on stern" in a hold are recorded. The conditions mean conditions where a product must not be placed in the ○○m range from the end on the stem side and in the ΔΔm range from the end on the stern side in a hold for convenience of work in a vessel. Therefore, when the work restriction conditions illustrated in FIG. 9 are considered, it is necessary to create the stowage planned positions under an interpretation that the hold is narrow corresponding to ○ ○m+ΔΔm in the longitudinal direction.

The hold information includes data, such as stowable hold sizes corresponding to the name of a vessel, as illustrated in FIG. 10 and is recorded in the hold information file 86. In FIG. 10, it is recorded that the hold size of the vessel name "AA Maru" is space of a rectangular parallelepiped shape having a width of 16000 mm, a length of 40000 mm, and a height of 6000 mm. In the hold stowage planning processing, the stowage planned positions in the hold for thick sheets to be shipped are set in consideration of the work restriction conditions in the work restriction information illustrated in FIG. 8 and the warehouse restriction conditions in the hold information illustrated in FIG. 10.

Next, the stowage planning server 7 proceeds to Step S41 illustrated in FIG. 8 to initialize a value obtained by integrating the height and the weight of the thick sheets in the hold and the trim position of the vessel in the hold. Next, the stowage planning server 7 proceeds to Step S42 to judge whether a stowage lot for which the arrangement division is not set remains. When the stowage lot for which the arrangement division is not set remains, the stowage planning server 7 calculates and sets the arrangement division by performing the following processing for the stowage lot for which the arrangement division is not set.

The stowage planning server 7 first sorts all the stowage lots for which the arrangement division is to be set in an order reverse to an order in which the thick sheets are to be unloaded at a harbor of a consumer considering First In Last Out (FILO). Using the due dates as a sort key, all the stowage lots are sorted in an descending order in terms of the due dates so that the stowage lots having early due dates are unloaded first, and then rearranged so that the stowage lots having late due dates are stacked on the vessel bottom side.

Then, the stowage planning server 7 proceeds to Step S43 to calculate the arrangement divisions for all the stowage lots as the setting target according to the stowage basic rule. The calculation is performed in the sorted order. The figure in the upper side of FIG. 11 is a schematic view when the vessel 27 is viewed from the side surface. The figure in the lower side of FIG. 11 is a schematic view when the vessel 27 is viewed in plane. In this embodiment of the present invention, the arrangement divisions set for the stowage lots are divided into four divisions. The four arrangement divisions are obtained by equally dividing the space in the hold into two parts in each of the forward and backward direction along the travel direction of the vessel 27 and the width direction orthogonal to the travel direction of the vessel 27.

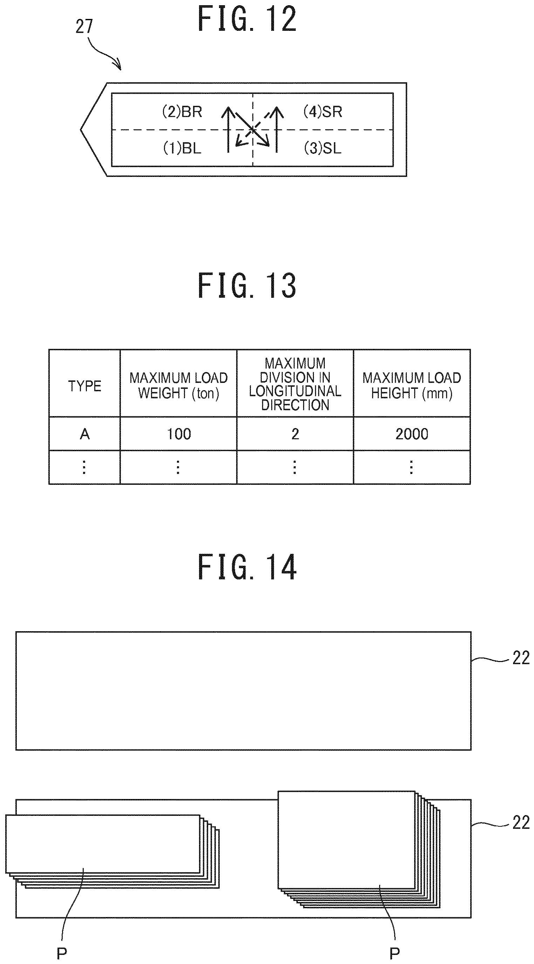

In the case of the stowage basic rule defining the use order of the arrangement divisions according to this embodiment of the present invention, the use order of the arrangement divisions is set so that the stowage lots are stowed in the order of (1) Arrangement division BL on the left side of the stem, (2) Arrangement division BR on the right side of the stem, (3) Arrangement division SL on the left side of the stern, and (4) Arrangement division SR on the right side of the stern illustrated in FIG. 12. After a stowage lot is stowed in the (4) Arrangement division SR on the right side of the stern, a stowage lot stowed again in the (1) Arrangement division BL on the left side of the stem, and then the stowage is further repeated in the order of (2), (3)···.

(1) By stowing the stowage lots while moving the arrangement divisions in the order of (1) to (4), the thick sheets can maintain the balance so that a load as uniform as possible is applied in the hold considering the trim of the vessel. More specifically, in the hold stowage planning processing, a hold stowage plan for stowing the stowage lots in a hold in the descending order in terms of the due dates is created considering the stowage basic rule and restrictions of the stowage height of a plurality of board products and the trim of the vessel after stowing and the entire product group including all the stowage lots within the hold stowable size range. The stowage basic rule and the number of the arrangement divisions illustrated in FIG. 12 each are one example and may be varied as appropriate depending on the type of a vessel, the type of a dock crane, and the transportation specification specified by a consumer.

Next, the stowage planning server 7 proceeds to Step S44 illustrated in FIG. 8, and provisionally calculates the stowage height as an integrated value of the board thickness, the stowage weight, and the trim position of the entire vessel with respect to the four arrangement divisions BL, BR, SL, and SR. Next, the stowage planning server 7 proceeds to Step S45 to judge whether the results obtained by the provisional calculation do not match the height/trim restriction conditions in the hold by comparing the results obtained by the provisional calculation with the height/trim restriction conditions calculated from work restriction information and hold information. When the provisional calculation results match the conditions, the stowage planning server 7 proceeds to Step S49 to determine the arrangement divisions of the stowage lots to update the numerical values.

On the other hand, in Step S45, when the provisional calculations do not match the conditions, the stowage planning server 7 proceeds to Step S46 to judge whether the provisional calculation of the stowage height, the stowage weight, and the trim position has been tested in all the four arrangement divisions with respect to the stowage lots not matching the conditions. When the provisional calculation has not been completed in all the four arrangement divisions, the stowage planning server 7 proceeds to Step S47 to select the next arrangement division candidate for which the provisional calculation has not been tested, and then change the arrangement division to be set. Thereafter, the stowage planning server 7 proceeds to Step S44 to perform the provisional calculation processing of the stowage height, the stowage weight, and the trim position, and then proceeds to Step S45 again to judge whether the provisional calculation results do not match the conditions.

Then, when the provisional calculation results do not match the conditions, the stowage planning server 7 proceeds to Step S46 again to repeat each processing of Step S44 and Step S45 until all the arrangement divisions are subjected to the provisional calculation. In Step S46, when the height/trim restriction conditions are not satisfied even in the case where any arrangement division of the four arrangement divisions is set to the stowage lot not matching the conditions, the stowage planning server 7 proceeds to Step S48 to select the arrangement division having the lowest un-matching degree among the four arrangement divisions. Thereafter, the stowage planning server 7 proceeds to Step S49 to set the selected arrangement division for the stowage lot not matching the conditions. Then, the stowage planning server 7 determines the arrangement division for the stowage lot to update the numerical values, and then proceeds to Step S42. The stowage planning server 7 judges whether a stowage lot for which the arrangement division is not set remains. Then, when such a stowage lot remains, each processing of Step S43 to Step S49 is repeated to the final stowage lot so that the number of the stowage lots for which the arrangement division is not set becomes zero. Thereafter, the stowage planning server 7 assigns a series of stowage orders to all the thick sheets contained in each stowage lot with respect to all the stowage lots. A first stowage planned position contains the arrangement division set for each thick sheet and the stowage order assigned to each thick sheet.

For example, when the total number of thick sheets to be stowed in the arrangement division BL on the left side of the stem is 100, a first stowage planned position "BL-1" is created for the thick sheet on the bottom stage. A first stowage planned position "BL-100" is created for the thick sheet on the top stage in the arrangement division BL on the left side of the stem. Therefore, in order to know the number of thick sheets stowed on a desired thick sheet in the arrangement division BL on the left side of the stem, the number may be obtained by subtracting the number included in the first stowage planned position for the desired thick sheet from the total number of the thick sheets stowed in the arrangement division BL on the left side of the stem. The method for assigning the number of the stowage order may be changed as appropriate and the method for configuring the first stowage planned position may also be changed as appropriate.

Next, the stowage planning server 7 proceeds to Step S4 illustrated in FIG. 3 to perform transport palette loading planning processing. In Step S4, a thick sheet transportation plan from the product warehouse to the vessel is created according to the created first stowage planned positions. First, transport palette loading planning unit 74 of the stowage planning server 7 receives work restriction information defining the maximum number of thick sheets which are able to be arranged on the palette storage place of the wharf illustrated in FIG. 9 from the work restriction information file 85 of the stowage planning database 8 and receives palette restriction information from the palette storage place restriction file 87.

The palette restriction information is data on the restrictions and the like about a stacking manner when the thick sheets are stacked on a transport palette as illustrated in FIG. 13. For example, the maximum load weight, the maximum number of divisions in the longitudinal direction, the maximum stacking height, and the like are recorded corresponding to the palette type. The maximum number of divisions in the longitudinal direction indicates the number in which products having a relatively short length are able to be placed at once in the longitudinal direction, i.e. , the possible number of divisions of heaps of thick sheets when the heaps of thick sheets are placed side by side in the longitudinal direction on a palette. FIG. 13 illustrates that, in the case of a palette of a type "A" , the maximum number of divisions in the longitudinal direction is 2, the maximum stacking height is 2000 mm, and the fact that thick sheets of 100 ton are able to be transported as the maximum load weight. A state is illustrated where two heaps of thick sheets P are placed side by side in the longitudinal direction of the palette 22 illustrated in the upper side of FIG. 14 on the palette 22 illustrated in the lower side of FIG. 14. By increasing the number of divisions of the heaps of the thick sheets on one palette, the selectable arrangement state of the thick sheets increases in palletized shipping. Then, the maximum transportation in the specification of the equipment in the steelworks is able to be achieved, so that the logistics cost is able to be reduced.

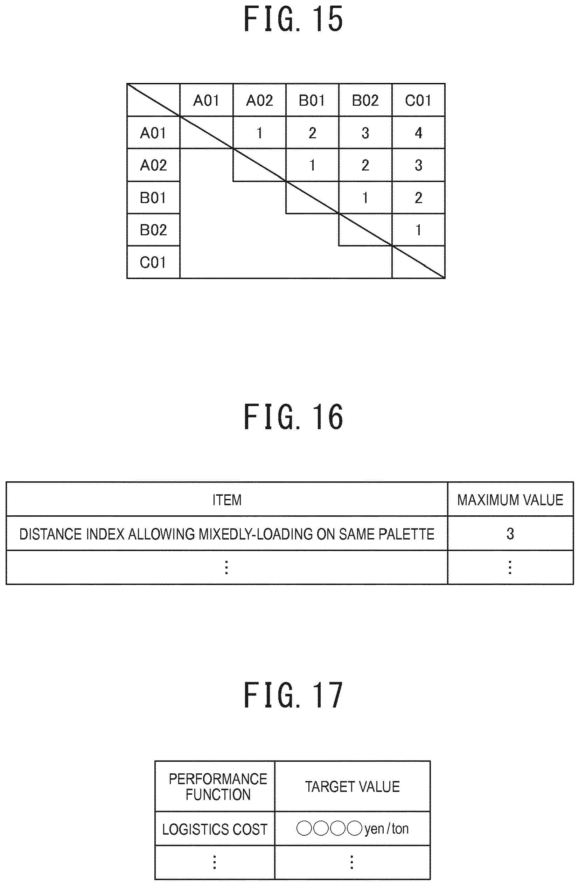

Next, the stowage planning server 7 successively determines a palette on which the thick sheets are to be loaded considering the series of stowage orders assigned to the thick sheets contained in the stowage lot. Herein, when thick sheets from a plurality of product warehouses are mixedly loaded on the same palette, the palette is required to be moved between the plurality of product warehouses. The determination of the palette on which the thick sheets are to be loaded is made considering that the distance indices between the product warehouses and the mixedly-loadable conditions on palette are satisfied. The distance indices between the product warehouses are data and the like in which the mutual distances between five product warehouses A01, A02, B01, B02, and C01, for example, are expressed with dimensionless integers as illustrated in FIG. 15. In the case of the distance indices illustrated in FIG. 15, a larger integer value is a longer mutual distance.

As illustrated in FIG. 16, the mixedly-loadable conditions on palette are data and the like set from the viewpoint of logistics cost reduction and define the maximum value of the distance index allowing mixedly-loading on the same palette. For example, when the maximum value of the distance index allowing mixedly-loading is 3, palette movement between two product warehouses having the numbers indicated in the columns and the rows in which the values of 1, 2, and 3 indicated as the distance indices are assigned in a table illustrated in FIG. 15 is permitted. Therefore, in the case of the product warehouses illustrated in FIG. 15, thick sheets which are able to be mixedly loaded together with thick sheets in a product warehouse A01 are thick sheets of the three product warehouses A01, A02, and B02 having the distance indices between the warehouses within 3. Mixedly-loading of thick sheets of the product warehouse A01 and thick sheets of the product warehouse C01 having a distance index from the product warehouse A01 is 4 is not permitted.

To each thick sheet for which the palette, on which the thick sheet is to be loaded, is determined, a palette ID and palette loading position information which are not illustrated are assigned. As the palette loading position information, an attribute indicating the heap position on the palette, e.g., "forward" and "backward" is given. The palette restriction information is not able to be satisfied by the stowage order set first, so that an efficient plan is not able to be created while increasing the quantity of the thick sheets to be loaded on a palette to the upper limit of the loading quantity in some cases. Herein, the stowage planning server 7 changes the stowage order so that the palette restriction information is satisfied to thereby increase the loading quantity to be able to increase the loading efficiency.

Next, the stowage planning server 7 proceeds to Step S5 to perform logistics cost evaluation processing. In the logistics cost evaluation processing, the logistics cost of a transport palette loading plan when work is executed so that the created stowage planned position is achieved is calculated, and then the efficiency of the plan is evaluated. Logistics cost evaluation unit 75 of the stowage planning server 7 receives planning conditions from the planning condition file 88 of the stowage planning database 8 illustrated in FIG. 3. The loading efficiency of the transport palette is directly linked to the logistics cost. Therefore, in order to evaluate the loading efficiency of the transport palette, data of a target value of the logistics cost is set as a performance function as the planning conditions according to the embodiment of the present invention. In the case where the value of the calculated logistics cost exceeds the target value of the logistics cost received from the planning condition file 88, and thus it is judged that the logistics cost needs to be improved, the stowage planning server 7 proceeds to Step S6 illustrated in FIG. 3 to perform plan condition modification processing.

In Step S6, when the distance index allowing mixedly-loading on the same palette illustrated in FIG. 15 is changed, the stowage planning server 7 proceeds to the transport palette loading planning processing of Step S4, and then plan condition modification unit 76 of the stowage planning server 7 performs plan condition modification processing so as to improve the logistics cost. For example, the maximum value of the distance index allowing mixedly-loading on the same palette is modified to "4" from "3". By the modification, mixedly-loading of the thick sheets of the product warehouse A01 and the thick sheets of the product warehouse C01 having a distance index from the product warehouse A01 is 4 illustrated in FIG. 15 is achieved. More specifically, the stowage planning server 7 creates mixedly-loading propriety conditions based on the distance between warehouses are newly established for mixedly-loading of products of a plurality of warehouses on the same palette. Then, when the newly established mixedly-loading propriety conditions are satisfied, the arrangement of products having separated stowage orders on the same palette is permitted.

The stowage planning server 7 proceeds to the hold stowage planning processing of Step S3 or the transport palette loading planning processing of Step S4 according to the type of data of the plan conditions to be modified, and then repeats each processing until the necessity of improving the logistics cost is eliminated. Since the stowage planning server 7 sets the stowage planned position considering the logistics cost according to transportation work and stowage work in a steelworks, the logistics cost concerning the shipping work of thick sheets is able to be reduced.

The stowage planning server 7 proceeds to Step S7 when stowage planned position information of each thick sheet which leads to a proper result free from the necessity of improving the logistics cost in Step S5 to output the first stowage planned position containing the obtained stowage planned position information to the stowage planned position file 91 of the loading position database 9 for recording. Then, the stowage planning server 7 proceeds to Step S8 to judge whether modification instructions of the stowage planned position from a consumer are input.

On the other hand, due to the fact that the information processing terminals 3 to 5 at a consumer accesses the loading position database 9 through the Web server 1, the first stowage planned position recorded in the stowage planned position file 91 is able to be displayed on display devices of the information processing terminals 3 to 5. In the lower side of FIG. 18, the first stowage planned positions recorded in the stowage planned position file 91 are illustrated in the form of being included in a modification instruction screen which urges a consumer to input a modification of the first stowage planned position of a thick sheet. The modification instruction screen is roughly divided into two parts of an upper side and a lower side. In the upper side, a state where all the thick sheets are stowed in a hold of a target vessel is iconographically illustrated. The iconographic image illustrated in the upper side of FIG. 18 illustrates a state where the entire stowed thick sheet is three-dimensionally illustrated when a vessel is viewed from the left direction in the travel direction, for example, assuming a depth direction in which the front side is the wharf side and the depth side is the sea side, and illustrates that thick sheets different in the destination are stowed by classifying the entire thick sheet into a plurality of regions by color. FIG. 18 illustrates the state where the entire thick sheet is roughly divided by color into five stages in the vertical direction as the stowage direction.

The iconographic image in the upper side of the modification instruction screen illustrated in FIG. 18 may be configured to change the viewpoint on the side of a consumer, i.e., the iconographic image may be rotatably configured, and further may be configured so that lines showing the trim position of a vessel and the like are also displayed. A configuration may be acceptable in which, by selecting the product ID of each thick sheet in the lower side of the modification instruction screen illustrated in FIG. 18 by clicking or the like, the selected thick sheet is displayed, in connection with the clicking, with a color different from the surrounding color in the entire iconographically-illustrated thick sheet heap illustrated in the upper side. Furthermore, a configuration may be acceptable in which a detailed specification and the like of each thick sheet are displayed on another screen by clicking the product ID of each thick sheet in the lower side.

In the lower side of the modification instruction screen illustrated in FIG. 18, instruction input units 31, 32··· which allow input of the stowage modification position desired by a consumer are illustrated on the right side of the hold stowage planned position which is the first stowage planned position for each thick sheet. When a thick sheet or a stowage lot is to be unload and transported in priority to the other thick sheets due to situations, such as a change of a manufacturing line, a consumer inputs a code indicating a new stowage planned position into each of the instruction input units 31, 32··· of the hold stowage modification position corresponding to the desired thick sheet.

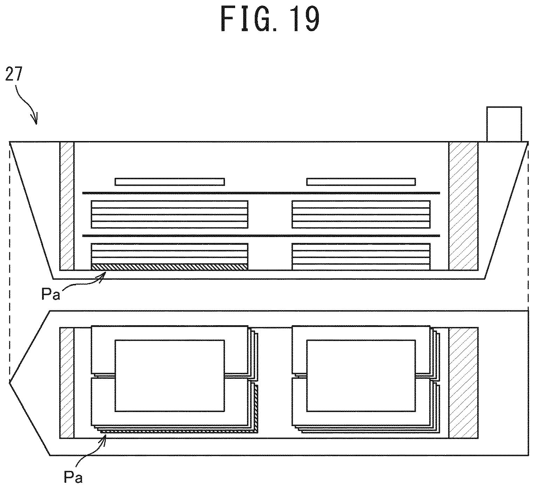

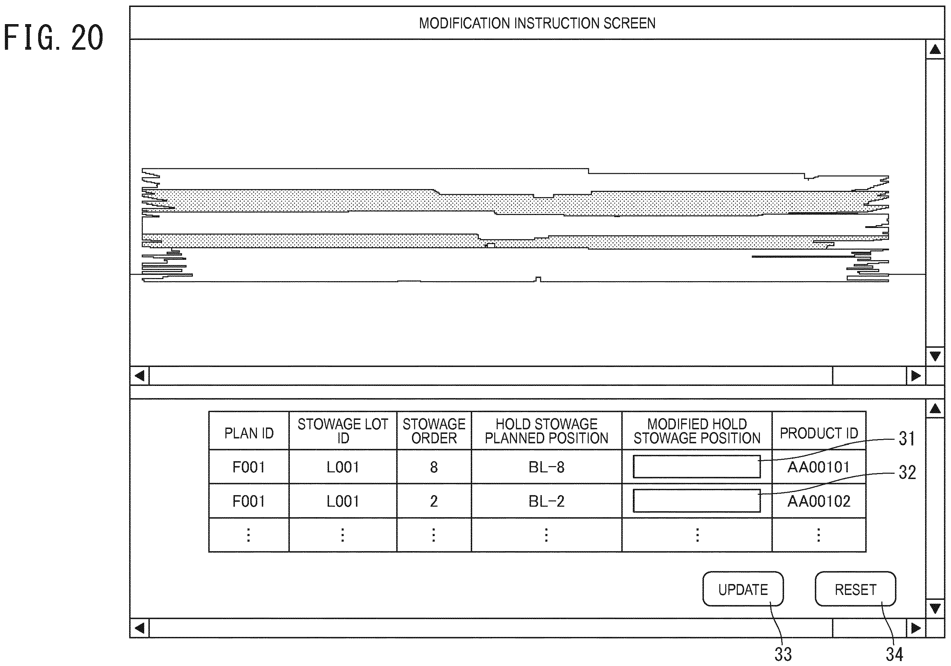

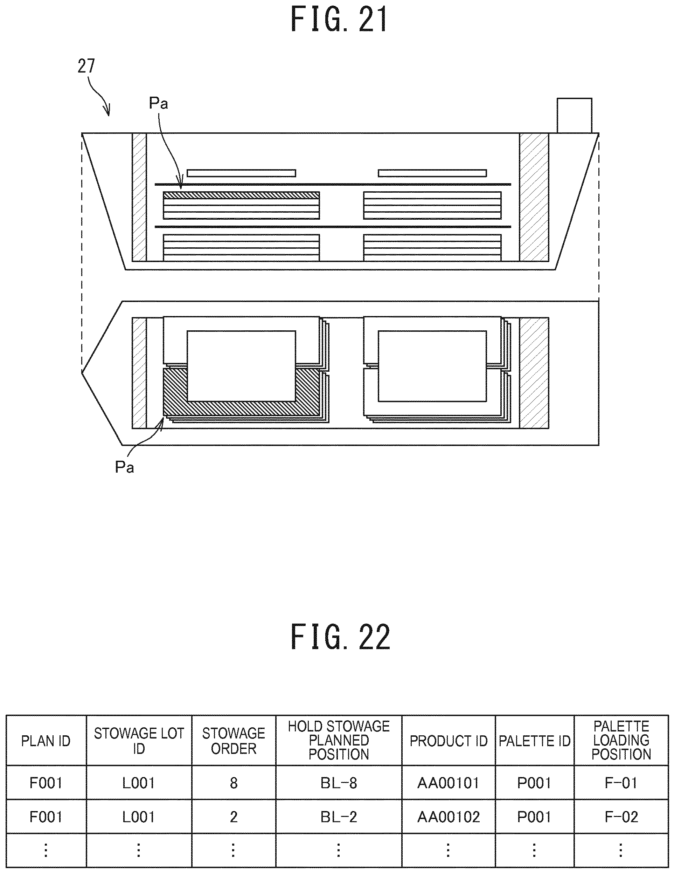

For example, as illustrated in FIG. 19, a thick sheet Pa at the bottom stage (BL-1) of the arrangement division BL on the left side of the stem of the vessel 27 is highlighted with hatch lines. When the stowage planned position of the thick sheet Pa is to be modified to a position (BL-8) on the top stage in the arrangement division BL on the same left side of the stem as illustrated in FIG. 21, the consumer inputs "BL-8" into the instruction input unit 31 in FIG. 18. The product ID of the thick sheet Pa to be modified is "AA00101". Next, when the consumer presses an update button 33, the hold stowage planned position of the thick sheet Pa having the product ID of "AA00101" is modified to "BL-8" and is updated as illustrated in FIG. 20.

The system is configured so that, when the determination of the updated stowage planned position is to be cancelled, the stowage planned position is returned to the state before updating when the consumer presses a reset button 34 illustrated in FIG. 18 and FIG. 20. The modification of the stowage planned position of other thick sheets is able to be performed in the same manner as in the thick sheet Pa. Then, a consumer presses a confirmation button (not illustrated) after the hold stowage planned positions of all the thick sheets to be modified are updated, whereby the modification instructions of the stowage planned positions about all the thick sheets are determined, and then, the determined modification instructions are transmitted to the Web server 1 at a manufacturer through the information network 2.

When the Web server 1 receives the modification instructions of the stowage planned positions from a consumer, the Web server 1 judges that there are the modification instructions of the stowage planned positions in Step S8 illustrated in FIG. 3, and then proceeds to Step S6 to perform the plan condition modification processing. The stowage planning server 7 performs the plan condition modification processing, and then proceeds to the hold stowage planning processing of Step S3 to perform each processing of Steps S3, S4, S5, and S7 to newly creates a second stowage planned position reflecting the modification contents of the consumer. The second stowage planned position is stored in the stowage planned position file 91 of the loading position database 9 separately from the first stowage planned position. Moreover, the Web server 1 notifies the fact that the stowage planned positions have been modified according to the modification instructions to the consumer by means of e-mail or the like. Hereinafter, the stowage planning server 7 performs each processing of Step S6, S3, S4, S5, and S7 until no modification instructions of the stowage planned position from the consumer are input, whereby the second stowage planned positions are updated every modification instruction in response to the modification instructions from the consumer.

When no modification instructions of the stowage planned position are input from the consumer, the stowage planning server 7 proceeds to Step S9 to judge whether the time limit for modification instruction input set beforehand arrives. The stowage planning server 7 stands-by while repeating the processing of Step S8 so as to be able to execute the modification whenever the modification instruction is input until the time limit for modification instruction input arrives. The convenience of the consumer is increased due to the configuration in which the stowage planned positions are able to be modified several times during the period until the predetermined time limit for modification instruction input arrives.

More specifically, due to the fact that the manufacturer notifies beforehand the product ID and the stowage planned position for each thick sheet to the consumer before the thick sheets are actually stowed in a hold, the consumer can correctly know the stowage planned position for each thick sheet. Therefore, the shipping is able to be performed maximally considering a request of the consumer about the loading positions for the thick sheets before the actual stowage work of the thick sheets into the hold, which promotes the mutual cooperation between the consumer and the manufacturer. Moreover, the working efficiency when the consumer unloads the thick sheets is able to be increased.

Next, when the time limit for the modification instruction input arrives, the stowage planning server 7 proceeds to Step S10 to perform processing of outputting work instructions for realizing the created stowage planned positions. When there are no modification instructions from a consumer, the stowage planning server 7 receives the first stowage planned positions from the stowage planned position file 91 to create work instructions so that the plurality of thick sheets is actually individually stowed at the first stowage planned positions. On the other hand, when there are one or more modification instructions from a consumer, the stowage planning server 7 receives the finally created second stowage planned positions corresponding to the final modification instructions from a consumer from the stowage planned position file 91. Then, the stowage planning server 7 creates work instructions so that the plurality of thick sheets is actually individually stowed at the second stowage planned positions.

The stowage planning server 7 creates the work instructions including data, such as the plan ID, the stowage lot ID, the stowage order, the hold stowage planned position, the product ID, the palette ID, and the palette loading position, as illustrated in FIG. 22. The created work instructions are displayed on the information processing terminal for operator 10 and transmitted to the logistics device 11, such as a product transporting vehicle and a dock crane managing the handling. The operator and the logistics device 11 start a series of transportation work and stowage work according to the transmitted work instructions. Moreover, the stowage planning server 7 outputs the work instructions to the work instruction file 89 of the stowage planning database 8 for storing.

Next, the stowage planning server 7 proceeds to Step S11 to judge whether the cancellation of the shipping occurs in a thick sheet among the thick sheets to be shipped. During the transportation work and the stowage work of the thick sheets, the surface may be damaged due to, for example, contact, fall, and the like, so that the shipping of such a thick sheet is suddenly cancelled. When the information that the shipping of the thick sheet is judged to be cancelled, is input into the stowage planning server 7 through the information processing terminal for operator 10, the stowage planning server 7 judges that the shipping of the thick sheet is cancelled, and then proceeds to Step S1. The stowage planning server 7 subjects all the other thick sheets except the thick sheet, the shipping of which is cancelled, to the processing of Step S1 to Step S9 including the hold stowage planning processing to create a third stowage planned position substituting the first stowage planned position or the second stowage planned position, and then stores the third stowage planned position in the stowage planned position file 91 of the loading position database 9. Herein, a thick sheet having a specification equivalent to the thick sheet, the shipping of which is cancelled, may be prepared as a substitute, and then the third stowage planned position may be created including the thick sheet as the substitute in the thick sheets to be shipped.

Next, the stowage planning server 7 proceeds to Step S10 to create work instructions so that the thick sheets are actually individually stowed at the third stowage planned positions. The operator and the logistics device 11 resume the transportation work and the stowage work of the thick sheets in response to the new work instructions. When it is judged that there is no input of information that the shipping of a thick sheet is cancelled, the stowage planning server 7 proceeds to Step S12 to judge whether all the thick sheets are stowed in the hold. In the embodiment of the present invention, the stowage planning server 7 is configured to be able to judge whether all the thick sheets to be shipped are located in the hold with reference to the position information on each thick sheet input from the operator and the logistics device 11. When there is a thick sheet which is not stowed in the hold, the stowage planning server 7 proceeds to Step S11 to judge whether there is any input of information that the shipping of a thick sheet is cancelled, i.e., there is a necessity of updating the third stowage planned position. Then, when the cancellation of the shipping occurs in a thick sheet again, the stowage planning server 7 proceeds to Step S1 to repeat the processing of updating the third stowage planned position.

When it is judged that all the thick sheets are stowed in the hold, the stowage planning server 7 proceeds to Step S13 to output the third stowage planned position finally stored in the stowage planned position file 91 of the loading position database 9 as the loading position to be notified to a consumer to the loading position file 92. When no cancellation of the shipping occurs in a thick sheet, the first stowage planned position or the second stowage planned position is output as the loading position to the loading position file 92.

More specifically, according to the board product loading position notification system according to the embodiment of the present invention, in the case where, after the stowage planning server 7 first creates the first stowage planned position, there are no modification instructions from a consumer before the stowage work and no cancellation of the shipping occurs in a thick sheet after the stowage work is started, the first stowage planned position is notified as information on the loading position to a consumer. Moreover, when there are one or more modification instructions from a consumer before the stowage work and no cancellation of the shipping occurs in a thick sheet after the stowage work is started, the information on the second stowage planned position reflecting the final modification request of a consumer is notified substituting the first stowage planned position as information on the loading position to the consumer. Moreover, when the cancellation of the shipping occurs in a thick sheet after the stowage work is started, the information on the third stowage planned position that the stowage planning server 7 finally creates during the stowage work is notified substituting the first stowage planned position or the second stowage planned position as the loading position to the consumer.

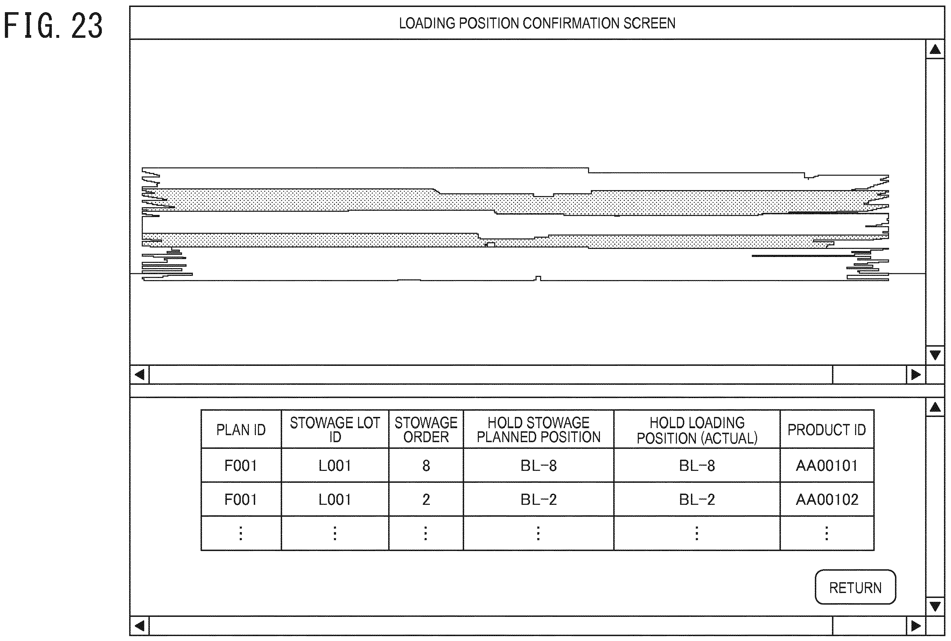

The loading positions stored in the loading position file 92 are able to be displayed on display devices of the information processing terminals 3 to 5 due to the fact that the information processing terminals 3 to 5 at the consumer access the loading position database 9 through the Web server 1. FIG. 23 illustrates an example of a loading position confirmation screen displaying that the thick sheet having the product ID "AA00101" has been actually shipped at the top stage (BL-8) of the arrangement division BL on the left side of the stem of the vessel 27 in response to the input of the modification instruction illustrated in FIG. 20.

When the Web server 1 executes the processing according to Steps S1 to S13 through the stowage planning server 7, the board product loading position notification method according to the embodiment of the present invention is implemented. Among each processing of Steps S1 to S13 described above, the processing of Step S1 to Step S12 is equivalent to the processing to be executed by the stowage planned position creation unit of the present invention. By configuring a program so as to cause the Web server 1 to execute the step of each processing of the board product loading position notification method according to the embodiment of the present invention, a board product loading position notification program is configured. In order to execute the program, the program may be stored in the main memory of the Web server 1, and then the stored program may be read out from the main memory and executed as appropriate, for example.

According to the board product loading position notification system according to the embodiment of the present invention, the opportunity of reflecting modification instructions of a consumer to the loading position for each thick sheet in a hold is able to be increased more than before, so that loading positions satisfying the request of the consumer as much as possible are able to be created. Therefore, when the vessel loading the thick sheets arrives at a harbor of the consumer, the efficiency of classification work of the consumer is improved.

Moreover, according to the board product loading position notification system according to the embodiment of the present invention, the stowage planning server 7 is configured to pursue and grasp the positions of the thick sheets in all the stages during the storage in a product warehouse, during the transportation work to a wharf, and during lifting work by a dock crane of all the thick sheets. Therefore, the stowage planned position for each thick sheet finally stored in the stowage planned position file 91 and the actual loading positions are promptly linked to each other, and there are no differences between the positions. Then, a consumer is able to acquire correct loading positions for all the actually shipped thick sheets in a hold as the loading positions from a manufacturer. Therefore, even in the case where, after stowing thick sheets, a thick sheet is to be urgently unloaded and the thick sheet is preferentially unloaded, a consumer correctly knows the number of thick sheets stowed on a desired thick sheet in the hold, so that there is no necessity of unloading extra thick sheets stowed below the desired thick sheet. Accordingly, the desired thick sheet is able to be efficiently unloaded without unloading all the stowage lots including the desired thick sheet from the hold.

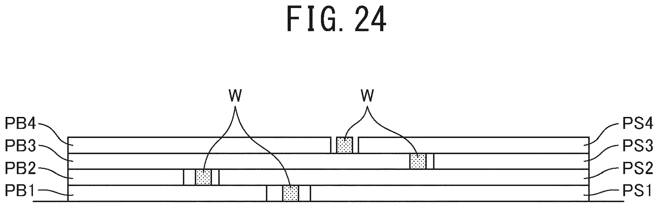

In particular, when board products, such as thick sheets, are stowed in a hold, a state arises in which the upper surface of the board product simultaneously contact not only the undersurface of a board product on the upper side of the same arrangement division as that of the board product but the undersurface of a board product in an adjacent arrangement division. FIG. 24 illustrates a state where four thick sheets PB1 to PB4 stacked on either side in the left and right direction on the stem side of a vessel and four thick sheets PS1 to PS4 stacked on the same side as that of the thick sheets PB1 to PB4 on either side in the left and right direction on the stern side of the vessel are stacked with end portions of the thick sheets on the same stage facing each other.

As illustrated in FIG. 24, the upper surface of the thick sheet PB1 on the bottom stage on the stem side contacts both the undersurface of the thick sheet PB2 on the second stage from the bottom on the same stem side and a part of the undersurface of the thick sheet PS2 on the second stage from the bottom on the stern side. Moreover, the upper surface of the thick sheet PS2 on the second stage from bottom on the stern side contacts both the undersurface of the thick sheet PS3 on the third stage from the bottom on the same stern side and a part of the undersurface of the thick sheet PB3 on the third stage from the bottom on the stem side. Moreover, the upper surface of the thick sheet PB3 on the third stage from the bottom on the stem side contacts both the undersurface of the thick sheet PB4 on the top stage on the same stem side and a part of the undersurface of the thick sheet PS4 on the top stage on the stern side.

More specifically, board products are not only stowed in a region inside a set arrangement division among plurality of arrangement divisions but stowed over regions inside adjacent arrangement divisions considering the stowage efficiency in some cases. For example, when a case is supposed where the thick sheet PB1 on the bottom stage of an arrangement division on the stem side is unloaded, the unloading is not achieved only by removing only the three thick sheets PB2, PB3, and PB4 above the thick sheet PB1 on the bottom stage in the same arrangement division and it is required to simultaneously remove the thick sheet PS2 on the second stage from the bottom, the thick sheet PS3 on the third stage from the bottom, and the thick sheet PS4 on the top stage on the stern side. Furthermore, in shipping of iron or steel articles, a plurality of battens W as interposing timbers to be disposed between the thick sheets is used in many cases as illustrated in FIG. 24. Therefore, when a desired thick sheet is preferentially unloaded, a burden of handling and removing the battens W also arises in addition to the unloading work of the thick sheets.

Therefore, the use of the board product loading position notification system according to the embodiment of the present invention can reduce, when a desired board product is preferentially unload, not only the work burden arising in connection with the unloading of the board products below the desired thick sheet but a supplementary work burden on the consumer side, such as the removal of board products of adjacent arrangement divisions or battens. Moreover, according to the board product loading position notification system according to the embodiment of the present invention, the stowage planned position for each thick sheet is created before the stowage work of the thick sheets so as to establish a transport palette loading plan enabling a reduction in logistics cost, and therefore the logistics cost relating to the shipping work of a manufacturer is able to be reduced.

Although the present invention is described on the basis of the aforementioned embodiments, it should be understood that the descriptions and the drawings that constitute parts of this disclosure do not limit the present invention.

Various alternative embodiments, examples, and operation techniques will be apparent from the disclosure to those skilled in the art. More specifically, the present invention includes various embodiments and the like which are not described in the description above and the technical scope of the present invention should be defined only by the matters used to specify the invention according to the scope of claims reasonably understood from the above description.

### Reference Signs List

1 Web Server
2 information network
3 to 5 information processing terminal at shipping destination
7 stowage planning server (stowage planned position creation unit)
8 stowage planning database
9 loading position database (database)
27 vessel
71 shipping data input unit
72 shipping data consolidation unit
73 hold stowage planning unit
74 transport palette loading planning unit
75 logistics cost evaluation unit
P thick sheet (board product)

## Claims

1. A board product loading position notification system for notifying a loading position for each of a plurality of board products in a hold of a vessel to a shipping destination in shipping the plurality of board products by vessel, the system comprising:
an information network;
a stowage planned position creation unit connected to the information network and a database, configured to create a first stowage planned position for each of the plurality of board products in a hold;
a Web server storing the first stowage planned position created by the stowage planned position creation unit as the loading position in the database; and
an information processing terminal at the shipping destination connected to the information network so that the loading position stored in the database is able to be accessed through the Web server.

2. The board product loading position notification system according to Claim 1, wherein, when an instruction of modifying the first stowage planned position through the information processing terminal at the shipping destination is received, the stowage planned position creation unit is configured to create a second stowage planned position for each of the plurality of board products in the hold based on the instruction, and
the Web server is configured to store the second stowage planned position substituting the first stowage planned position as the loading position in the database.

3. The board product loading position notification system according to Claim 2, wherein, when information that shipping of a board product is cancelled is input, the stowage planned position creation unit is configured to create a third stowage planned position for each of other board products except the cancelled board product in the hold, and
the Web server is configured to store the third stowage planned position substituting the second stowage planned position in the database as the loading position.

4. The board product loading position notification system according to any one of Claims 1 to 3, wherein the stowage planned position creation unit includes:
shipping data input unit configured to input shipping plan information, product information, and warehouse information on the plurality of board products;
shipping data consolidation unit configured to consolidate product groups having a same information attribute, which is input by the shipping data input unit, to set the product groups as a stowage lot;
hold stowage planning unit configured to create a hold stowage plan for stowing the stowage lots in the hold in a descending order in terms of due dates based on a stowage basic rule and restrictions of a stowage height of the plurality of board products and a trim of the vessel after stowing and an entire product group established for arrangement of the stowage lots in the hold within a stowable size range of the hold,
transport palette loading planning unit configured to create a transport palette loading plan for loading products to be shipped on a palette for transporting based on the hold stowage plan created by the hold stowage planning unit under conditions where palette storage place restrictions on a wharf and work restrictions in stacking products on the palette are satisfied, and
logistics cost evaluation unit configured to calculate and evaluate a logistics cost for the hold stowage plan and the transport palette loading plan created above,
wherein the stowage planned position creation unit is configured to create the first stowage planned position when the logistics cost calculated and evaluated by the logistics cost evaluation unit achieves a desired value.

5. A board product loading position notification method for notifying a loading position for each of a plurality of board products in a hold of a vessel to a shipping destination in shipping the plurality of board products by vessel, the method comprising:
processing of creating a first stowage planned position for each of the plurality of board products in the hold;
processing of stowing the plurality of board products in the hold based on the created first stowage planned positions; and
processing of notifying the first stowage planned position as the loading positions to the shipping destination.

6. The board product loading position notification method according to Claim 5, further comprising:
processing of creating a second stowage planned position for each of the plurality of board products in the hold based on an instruction of modifying the first stowage planned position when the instruction is received from the shipping destination;
processing of stowing the plurality of board products in the hold based on the second stowage planned position created above; and
processing of notifying the second stowage planned position substituting the first stowage planned position as the loading position to the shipping destination.

7. The board product loading position notification method according to Claim 6 further comprising:
processing of creating, when cancellation of shipping occurs in a board product, a third stowage planned position for each of other board products except the board product, the shipping of which is cancelled, in the hold;
processing of stowing the plurality of board products in the hold based on the third stowage planned position created above; and
processing of notifying the third stowage planned position substituting the second stowage planned position as the loading position to the shipping destination.

8. The board product loading position notification method according to any one of Claims 5 to 7, wherein the processing of creating the first stowage planned position comprises:
a shipping data input step of inputting shipping plan information, product information, and warehouse information on the plurality of board products;
a shipping data consolidation step of consolidating product groups having a same input information attribute in the shipping data input step to set the product groups as a stowage lot;
a hold stowage planning step of creating a hold stowage plan for stowing the stowage lots in the hold in a descending order in terms of due dates based on a stowage basic rule and restrictions of a stowage height of the plurality of board products and a trim of the vessel after stowing and an entire product group established for arrangement of the stowage lots in the hold within a range of a stowable size of the hold,
a transport palette loading planning step of creating a transport palette loading plan for loading products to be shipped on a palette for transporting based on the hold stowage plan created in the hold stowage planning step under conditions where palette storage place restrictions on a wharf and work restrictions in stacking products on the palette are satisfied, and
a logistics cost evaluation step of calculating and evaluating a logistics cost for the hold stowage plan and the transport palette loading plan created above, wherein, when the logistics cost calculated and evaluated achieves a desired value, the first stowage planned position is created.

9. A board product loading position notification program for notifying a loading position for each of a plurality of board products in a hold of a vessel to a shipping destination in shipping the plurality of board products by vessel, the program comprising:
an information network;
a Web server connected to the information network and a database; and
an information processing terminal at the shipping destination connected to the information network so that the loading position stored in the database is able to be accessed through the Web server, wherein the program causes the Web server to execute
a step of creating a first stowage planned position for each of the plurality of board products in the hold; and
a step of storing the created first stowage planned position as the loading position in the database.
